# EUROPEAN PATENT SPECIFICATION

(11) **EP 2 900 370 B1**
(45) Date of publication and mention of the grant of the patent: **01.01.2020**
(21) Application number: 13820884.8
(22) Date of filing: 27.09.2013
(51) Int. Cl.: B01J 23/10, B01J 23/02, B01J 23/83, B01J 23/76, B01J 23/745, C10G 27/12, C10G 29/16, C10G 27/04, B01J 37/20, B01J 37/03, B01J 37/02, B01J 35/02, B01J 35/00, B01J 27/053, B01J 27/043, B01J 23/34, B01J 23/28, B01J 23/00

(54) **METHODS AND COMPOSITIONS FOR DESULFURIZATION OF COMPOSITIONS**
VERFAHREN UND ZUSAMMENSETZUNGEN ZUR ENTSCHWEFELUNG VON ZUSAMMENSETZUNGEN
PROCÉDÉS ET COMPOSITIONS POUR DÉSULFURER DES COMPOSITIONS

(30) Priority: 28.09.2012 IN 2879MU2012
(43) Date of publication of application: 05.08.2015
(73) Proprietor: Aditya Birla Science And Technology Company Limited, Mumbai, Maharashtra 400 030 (IN)
(72) Inventor: CHAVAN, Sandeep Vasant, New Panvel (W) Mumbai 410206 (IN); KINI, Harshad Ravindra, Mumbai 400042 (IN)
(74) Representative: Hoefer & Partner Patentanwälte mbB
(86) International application number: PCT/IB2013/002825
(87) International publication number: WO 2014/049445

(56) References cited:
- JP-A- 2001 354 978
- US-A1- 2002 022 568
- US-A1- 2007 105 715
- US-A1- 2009 283 419
- US-A1- 2010 278 709
- US-B1- 7 038 090
- YI G ET AL: "OXIDATIVE DEHYDROGENATION OF ETHANE OVER LA1- SR FEO3-DELTA PEROVSKITE OXIDES", CATALYSIS LETTERS, SPRINGER NEW YORK LLC, UNITED STATES, vol. 38, no. 3/04, 1 May 1996 (1996-05-01) , pages 189-195, XP000590673, ISSN: 1011-372X, DOI: 10.1007/BF00806567
- ROYER ET AL: "Mechanism of stearic acid oxidation over nanocrystalline La"1"-"xA^'"xBO"3 (A'=Sr, Ce; B=Co, Mn): The role of oxygen mobility", APPLIED CATALYSIS B: ENVIRONMENTAL, ELSEVIER, AMSTERDAM, NL, vol. 80, no. 1-2, 22 November 2007 (2007-11-22), pages 51-61, XP022573692, ISSN: 0926-3373

## Description

### FIELD OF INVENTION

The methods and compositions disclosed herein are directed for desulfurization of a composition comprising sulfur, such as, for example, petroleum.

### BACKGROUND OF INVENTION

Stringent environmental regulations are increasingly being directed at reducing permissible levels of sulfur in petroleum and in the exhaust emitted upon burning petroleum products (e.g., fuels). Though there is no single consensus on the amount of allowable sulfur in petroleum across the world, there are government mandated regulations in all countries. For example, in Europe the Euro V fuel standard allows less than or equal to 10 parts per million of sulfur in on-highway petroleum since about 2005. The allowable sulfur content for Ultra Low Sulfur Diesel (ULSD) used in United States since September 2007, is less than or equal to 15 parts per million, which is much lower than the previous United States on-highway standard for Low Sulfur Diesel (LSD- less than or equal to 500 parts per million). In India, the sulfur content in diesel being used was previously less than or equal to 350 parts per million, and since April 1, 2010, Indian regulations direct the use of ULSD with less than or equal to 15 parts per million sulfur.

The primary reason for targeting low sulfur content in petroleum is to curb environmental pollution. Alternatively methods of minimizing the pollution by treating emissions results in increased costs. Further sulfur may poison and reduce the lifetime of the catalysts used in automotive catalytic converters that are used to clean up exhaust emissions. Though ULSD is the preferred fuel today, ULSD typically has lower energy content due to the heavy processing required to remove large amounts of sulphur, leading to lower fuel economy and higher fuel costs.

Carbon Black Feed Oil (CBFO) is a primary raw material in the manufacturing of Carbon Black. CBFO can be acquired either from oil refineries or from coal tar distillers or ethylene cracking units. One of the major issues faced with most of the CBFO is the high sulfur content. This sulfur leads to severe environmental concerns due to SO₂ emissions during Carbon Black manufacturing. In addition, it leads to corrosion of manufacturing and exhaust equipment. Another major drawback is that significant amounts of sulfur from CBFO can remain in the final Carbon Black powder as a contaminant. Thus, there is a need to develop a suitable commercially viable process for 'S' removal from the CBFO.

Various methods and compositions useful for desulfurization of compositions comprising sulfur, such as, for example, petroleum, have been explored and are still being explored with the increasing stringency mandated by governments in the allowable amount of sulfur in petroleum and emitted exhausts.

US Patent 7,038,090 B1 discloses a sulfur oxidation process of a composition containing hydrocarbons in the presence of a transition metal catalyst and oxygen.

Thus, there is a need for an improved and cost-effective process for desulfurization of petroleum.

Provided herein are methods and compositions useful for desulfurization of compositions comprising sulfur, such as, for example, petroleum.

### SUMMARY OF INVENTION

In accordance with the purpose(s) of the invention, as embodied and broadly described herein, the invention, in one aspect, relates to a method of reducing the amount of sulfur in a composition by contacting the composition with an oxidation agent and an oxidation catalyst.

Disclosed herein is a composition comprising an oxidation agent and an oxidation catalyst, wherein the oxidation catalyst has the formula M¹₁₋ₓM³_{xM}²O_{3,} wherein M¹ is a rare-earth element, wherein M² is a transition metal, wherein M³ is Ca or Sr, and wherein x is from 0.01 to 0.80. In one embodiment, the oxidation catalyst is impregnated with an acid, such as, sulfuric acid.

Also disclosed herein is a method for reducing the amount of sulfur in a composition comprising sulphur, the method comprising the steps of: (a) providing a composition comprising sulfur; and (b) contacting the composition comprising sulfur with an oxidation agent and an oxidation catalyst, wherein the oxidation catalyst has the formula M¹1-ₓSrₓM2O₃, wherein M¹ is a rare-earth element, wherein M² is a transition metal element, and wherein x is from 0.01 to 0.80, thereby reducing the amount of sulfur in the composition comprising sulfur. In one embodiment, the oxidation catalyst is impregnated with an acid, such as, sulfuric acid.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

### DETAILED DESCRIPTION

The present invention can be understood more readily by reference to the following detailed description of the invention and the Examples included therein.

It is to be understood that the terminology used herein is for the purpose of describing particular aspects only and is not intended to be limiting. Although any methods and materials similar or equivalent to those described herein can be used in the practice or testing of the present invention, example methods and materials are now described.

All publications mentioned herein disclose and describe the methods and/or materials in connection with which the publications are cited. The publications discussed herein are provided solely for their disclosure prior to the filing date of the present application. Nothing herein is to be construed as an admission that the present invention is not entitled to antedate such publication by virtue of prior invention. Further, the dates of publication provided herein can be different from the actual publication dates, which can require independent confirmation.

### 1. Definitions

As used herein, nomenclature for compounds, including organic compounds, can be given using common names, IUPAC, IUBMB, or CAS recommendations for nomenclature.

As used in the specification and the appended claims, the singular forms "a," "an" and "the" include plural referents unless the context clearly dictates otherwise. Thus, for example, reference to "a oxidation agent," includes mixtures of two or more such oxidation agents.

Ranges can be expressed herein as from "about" one particular value, and/or to "about" another particular value. When such a range is expressed, a further aspect includes from the one particular value and/or to the other particular value. Similarly, when values are expressed as approximations, by use of the antecedent "about," it will be understood that the particular value forms a further aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

References in the specification and concluding claims to parts by weight of a particular element or component in a composition denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein, the terms "optional" or "optionally" means that the subsequently described event or circumstance can or cannot occur, and that the description includes instances where said event or circumstance occurs and instances where it does not.

As used herein the term "petroleum" refers to petroleum and petroleum products. In various embodiments, petroleum may include but is not limited to products selected from the group consisting of crude petroleum, asphalt, tar, refined petroleum, distilled products of petroleum like diesel, petrol, kerosene, Carbon Black Feedstock, Carbon Black Feed Oil ,etc., and synthetic mixtures formed using distillates of petroleum. As used herein the term "sulphur" (as spelled in United Kingdom English) may alternatively spelled as "sulfur" (as spelled in American English). In one embodiment, petroleum can be Carbon Black Feedstock. Carbon Black Feedstock is known to one skilled in the art and is generally considered to be C₁₂ and higher components rich in naphthalene, methyl-indenes, anthracene, fluorene, and other poly-aromatic components. In another embodiment, a Carbon Black Feedstock can comprise various carbochemical and/or petrochemical oils, for example, that have a high content of aromatic hydrocarbons and/or containing a plurality of condensed rings. In one embodiment, Carbon Black Feedstock originates from the high temperature cracking of petroleum fractions. In another embodiment, the petroleum can be residual oil. "Residual oil" as used herein refers to petrochemical oils resulting from catalytic cracking processes, for example, catcracker decant oils, or from the production of olefins in steam crackers using naptha or gas oil as a raw material.

The term " desulfurization" is intended to refer to the reduction and/or elimination of sulfur and/or a sulfur containing species in a composition.

The term "rare-earth element" is understood by one skilled in the art and include, but are not limited to, lanthanum (La), cerium (Ce), praseodymium (Pr), samarium (Sm), gadolinium (Gd), yttrium (Y), neodymium (Nd), europium (Eu), terbium (Tb), dysprosium (Dy), holmium (Ho), erbium (Er), thulium (Tm), ytterbium (Yb), scandium (Sc), promethium (Pm), and lutetium (Lu).

The terms "transition metal" and "transition element" are used interchangeably herein and are understood by one of skill in the art and include, but are not limited to, iron (Fe), cobalt (Co), nickel (Ni), copper (Cu), scandium (Sc), titanium (Ti), vanadium (V), chromium (Cr), manganese (Mn), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), mercury (Hg), and gold (Au).

### 2. Methods and compositions

The methods and compositions disclosed herein are useful for reducing the amount of sulfur in a composition comprising sulfur.

Embodiments of the disclosed methods herein provide an improved process for the desulfurization of compositions comprising sulfur, such as, petroleum. Crude petroleum is known to be desulfurized based on oxidation of sulfur species by a suitable oxidizing agent in the presence of suitable oxidation catalysts. As mentioned above with the increasing stringency in the allowable amount of sulfur as per government mandates in various countries improved, efficient, and cost effective methods are being continuously explored for sulfur removal, particularly organic sulfur removal, from petroleum. Accordingly in one embodiment, is provided a process for desulfurization of compositions comprising sulfur, such as, petroleum.

Advantageously the catalysts employed herein for the process of desulfurization have been found capable of functioning at relatively low temperatures, i.e., at a temperature in the range of about 20 °C to 150 °C. Moreover, the catalysts employed herein can, in one embodiment, be capable of achieving a reduction of greater than equal to about 97 % of the amount of sulfur in petroleum products for example diesel, petrol, etc. and greater than equal to about 50 % of the amount of sulfur in the fractions of crude petroleum that remains after distillation of various petroleum products.

The disclosed methods involve the use of a catalyst system which is able to increase the efficiency of oxidizing agents such as hydrogen peroxide in the removal of sulfur from various compositions. The disclosed methods and compositions have high efficiency towards the removal of sulfur from liquids such as petroleum oils, due to the high efficiency of the catalyst system.

In one embodiment, the disclosed method is a method for desulfurization of petroleum.

Disclosed herein is a composition comprising an oxidation agent and an oxidation catalyst, wherein the oxidation catalyst has the formula M¹₁₋ₓM³ₓM²O₃, wherein M¹ is a rare-earth element, wherein M² is a transition metal, wherein M³ is Ca or Sr, and wherein x is from 0.01 to 0.80. In one embodiment, the oxidation catalyst is impregnated with an acid, such as, sulfuric acid.

Also disclosed herein is a method of reducing the amount of sulfur in a composition comprising sulphur, the method comprising the steps of: (a) providing a composition comprising sulfur; and (b) contacting the composition comprising sulfur with an oxidation agent and an oxidation catalyst, wherein the oxidation catalyst has the formula M¹₁₋ₓM³ₓM²O₃, wherein M¹ is a rare-earth element, wherein M² is a transition metal, wherein M³ is Ca or Sr, and wherein x is from 0.01 to 0.80, thereby reducing the amount of sulfur in the composition comprising sulfur. In one embodiment, the oxidation catalyst is impregnated with an acid, such as, sulfuric acid.

Also disclosed herein is a method of desulfurization petroleum, the method comprising contacting a feed stream of petroleum with an oxidation catalyst in the presence of an oxidizing agent, wherein the oxidation catalyst has the formula M¹₁₋ₓM³ₓM²O₃, wherein M¹ is a rare-earth element, wherein M² is a transition metal, wherein M³ is Ca or Sr, and wherein x is from 0.01 to 0.80. In one embodiment, the oxidation catalyst is impregnated with an acid, such as, sulfuric acid.

In one embodiment, the step of providing a composition comprising sulfur comprises providing a feed stream of a composition comprising sulfur.

In one embodiment, the composition comprising sulfur comprises petroleum, for example, the composition comprising sulfur can be petroleum. In one embodiment, the petroleum can be distilled products of petroleum or synthetic mixtures formed using distillates of petroleum. Non-limiting examples of distilled products of petroleum include diesel, petrol, and kerosene. In one example, petroleum can be diesel or petrol. In another embodiment, the petroleum can be crude petroleum, asphalt, tar, or refined petroleum.

In one embodiment, the oxidation agent can comprise H₂O₂, NO₂, N₂O₃, N₂O₄, acetic acid, tert-butyl hydrogen peroxide (TBHP), formic acid, sulfuric acid, nitric acid, O₂, air, or ozone, or a combination thereof. For example, the oxidation agent can comprise H₂O₂, NO₂, N₂O₃, N₂O₄, acetic acid, tert-butyl hydrogen peroxide (TBHP), formic acid, sulfuric acid, or nitric acid, or a combination thereof. In another example, the oxidation agent can comprise H₂O₂, NO₂, N₂O₃, N₂O₄, acetic acid, or tert-butyl hydrogen peroxide, or a combination thereof. In yet another example, the oxidation agent can comprise H₂O₂.

In one embodiment, the oxidation catalyst has the formula M¹₁₋ₓSrₓM²O₃, wherein M¹ is a rare-earth element, wherein M² is a transition metal, and wherein x is from 0.01 to 0.80

In one embodiment, M¹ is a rare-earth element selected from the group consisting of lanthanum (La), cerium (Ce), praseodymium (Pr), samarium (Sm), gadolinium (Gd), yttrium (Y), neodymium (Nd), europium (Eu), terbium (Tb), dysprosium (Dy), holmium (Ho), erbium (Er), thulium (Tm), ytterbium (Yb), scandium (Sc), and lutetium (Lu). In another example, M¹ is a rare-earth element selected from the group consisting La, Y, Yb, Nd, Ce, and Tb. In yet another example, M¹ is a rare-earth element selected from the group consisting of La, Pr, Gd, Sm, Nd, and Ce. In yet another example, M¹ is the rare-earth element La.

In one embodiment, M² is a transition metal selected from the group consisting of iron (Fe), cobalt (Co), nickel (Ni), copper (Cu), scandium (Sc), titanium (Ti), vanadium (V), chromium (Cr), manganese (Mn), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), mercury (Hg), and gold (Au). For example, M² can be a transition metal selected from the group consisting of Fe, Ru, Ir, Co, Rh, Pt, Pd, and Mo. In another example, M² is a transition metal selected from the group consisting of Fe, Mn, Ni, Co, Mo, and Cu. In another example, M² is the transition metal Fe.

In one embodiment, M³ is Ca. In another embodiment, M³ is Sr.

In one embodiment, M¹₁₋ₓM³ₓM²O₃ is M¹₁₋ₓSrₓM²O₃.

In one embodiment, M¹ is a rare-earth element selected from the group consisting of La, Pr, Gd, Sm, Nd, and Ce; M² is a transition metal selected from the group consisting of Fe, Mn, Ni, Co, Mo, and Cu; and M³ is Sr or Ca. In one example, M¹ is a rare-earth element selected from the group consisting of La, Pr, Gd, Sm, Nd, and Ce; M² is a transition metal selected from the group consisting of Fe, Mn, Ni, Co, Mo, and Cu; and M³ is Sr. In another example, M¹ is the rare-earth element La; M² is the transition metal Fe; and M³ is Sr.

In one embodiment, in the formula M¹₁₋ₓM³ₓM²O₃, x can be from 0.01 to 0.80. For example, x can be from 0.10 to 0.50. In another example, x can be from 0.10 to 0.30. In yet another example, x can be from 0.15 to 0.25. If x is 0.20, then M¹₁₋ₓM³ₓM²O₃ has the formula M¹_{0.80}M³_{0.20}M²O₃. Thus, the formula M¹₁₋ₓM³ₓM²O₃ can in one example be La_{0.80}Sr_{0.20}FeO₃

In one aspect, the oxidation catalyst is impregnated with sulfuric acid solution.

In one embodiment, the oxidation catalyst is in a nano-crystalline form. Thus, the formula M¹₁₋ₓM³ₓM²O₃ can be in a nano-crystalline form. In another embodiment, the oxidation catalyst can be in the form of a salt. In yet another embodiment, the nano-crystalline form of the oxidation catalyst can be a salt form of the oxidation catalyst. For example, the oxidation catalyst can be impregnated with a solution comprising sulfuric acid, which forms the nano-crystalline sulphuric acid salt of M¹₁₋ₓM³ₓM²O₃. Thus, in one example, the oxidation catalyst can be impregnated with a solution comprising an acid, such as sulfuric acid. In one embodiment, the nano-crystalline form of the oxidation catalyst has an average size of from about 5 nm to about 100 nm, such as for example, from about 5 nm to about 80 nm; from about 5 nm to about 50 nm; from about 25 nm to about 100 nm; or about 50 nm to about 100 nm.

In one embodiment, the oxidation catalyst is present in an organic solvent. Non-limiting examples of organic solvents include, alkanes, for example, pentane, hexane, heptanes, and octane. In another example, the solvent can be aryls, cycloalkanes, cycloalkenes, alkenes, and the like, for example toluene, and xylene.

In one embodiment, contacting the composition comprising sulfur with an oxidation agent and an oxidation catalyst can occur at a temperature from 20 °C to 150 °C, such as from 60 °C to 150 °C.

In one embodiment, contacting the composition comprising sulfur with an oxidation agent and an oxidation catalyst can occur for at least 15 min, 30 min, 60 min, 90 min, 120 min, 180 min, 240 min, or 300 min.

In other embodiments, the order of contacting can vary and comprise any suitable order for a desired product. In one embodiment, a sulfur containing composition can be contacted first with an oxidation catalyst and then with an oxidation agent. In another embodiment, a sulfur containing composition can be contacted first with an oxidation agent and then with an oxidation catalyst. In another embodiment, a sulfur containing composition can be contacted simultaneously or substantially simultaneously with both an oxidation catalyst and an oxidation agent.

In one embodiment, the amount of oxidizing agent can be from about 5% to about 300% volume per volume of the composition comprising sulfur. For example, the amount of oxidizing agent can be from about 5% to about 100% volume per volume of the composition comprising sulfur. In another example, the amount of oxidizing agent can be from about 20% to about 80% volume per volume of the composition comprising sulfur. In one embodiment, an amount of oxidation catalyst employed based on the use of hydrogen peroxide (H₂O₂) as the oxidizing agent is in a range of about 1 % to about 50 % volume per volume in oil or petroleum.

In one embodiment, the oxidation catalyst can be present in an amount of solvent in a range of from about 1 % to about 60 % weight by volume. In one embodiment, when the oxidation catalyst is a nano-crystalline compound of formula M¹₁₋ₓM³ₓM²O₃, the oxidation reaction may be carried out in an amount of solvent in a range of from about 1 % to about 60 % volume by volume. In one embodiment, when the oxidation catalyst of formula M¹₁₋ₓM³ₓM²O₃ is impregnated with sulfuric acid solution the oxidation reaction may be carried out in an amount of solvent in a range of from about 1 % to about 60 % weight by volume.

In one embodiment, the methods disclosed herein can reduce the amount of sulfur present in the composition by at least 40%, 50%, 60%, 70%, 80%, 85%, 90%, 95%, 97%, 98%, 99%, or 99.5%. In one embodiment, the methods disclosed herein can reduce the amount of sulfur in the composition by at least 97%, 98%, 99%, or 99.5%, wherein the composition comprising sulfur comprises n-octane and thiophene. In one example, the methods disclosed herein can reduce the amount of sulfur in the composition by at least 85%, 90%, 95%, 97%, 98%, 99%, or 99.5%, wherein the composition comprising sulfur comprises distilled petroleum products. In another example, the methods disclosed herein can reduce the amount of sulfur in the composition by at least 50%, 60%, 70%, or 80%, wherein the composition comprising sulfur comprises crude petroleum. For example, the disclosed methods can reduction of initial sulfur content in the composition from about 20,000 ppm to about 70 ppm when the composition comprises n-octane and thiophene.

In one embodiment, the composition disclosed herein can further comprise a solvent. Non-limiting examples of organic solvents include, alkanes, for example, pentane, hexane, heptanes, and octane. In another example, the solvent can be aryls, cycloalkanes, cycloalkenes, alkenes, and the like, for example toluene, and xylene.

By employing the methods disclosed herein, an improved, efficient, and cost effective method for desulfurization of petroleum can be made possible at lower reaction temperatures and from starting materials that have a relatively high concentration of sulfur.

In one embodiment, the oxidation catalyst can be a nano-crystalline form of the sulfuric acid salt of the compound of formula M¹₁₋ₓM³ₓM²O₃. In one embodiment, when the oxidation catalyst may be a sulfuric acid salt of the compound of formula M¹₁₋ₓM³ₓM²O₃, the oxidation catalyst may have a crystallite size in a range of 5 nm to about 100 nm. In one embodiment, an amount of oxidation catalyst in a nano-crystalline form employed based on use of hydrogen peroxide (H₂O₂) as the oxidizing agent in a range from about 1 % to about 50 % volume per volume in oil or petroleum.

Suitable methods of synthesizing the catalysts used herein include but are not limited to methods selected from the group consisting of gel-combustion, citrate-nitrate, solgel method, hydrothermal, sono-chemical etc. In one embodiment, the oxidation catalyst synthesized using methods mentioned herein can be a nano-crystalline compound. In one embodiment, the oxidation catalyst is further sulfonated by treatment with sulfuric acid. In one embodiment, the nano-crystalline form on treatment with sulfuric acid yields a sulfonated nano-crystalline oxidation catalyst.

In one embodiment, the method comprises a feed stream containing thiophene in n-octane, wherein the desulfurization has an efficiency of at least 97%. For example, the desulfurization process carried out on a feed stream containing a high initial concentration of sulfur of greater than or equal to 15,000 parts per million can yield a desulfurized product containing less than or equal to 500 parts per million sulfur.

In one embodiment, the methods disclosed herein can significantly reduce the amount of sulfur in petroleum left behind after distilling upper cuts such as petrol, diesel, kerosene, etc. These residues, or residual oil, is typically know to have a sulfur content of greater than or equal to about 20,000 parts per million. A solution of residual oil in n-octane in a 50:50 volume per volume ratio corresponding to an initial sulfur content of about 20,000 parts per million can exhibit a reduction in sulphur of at least 50% by using the methods disclosed herein.

### Examples

The following examples are put forth so as to provide those of ordinary skill in the art with a complete disclosure and description of how the methods and compositions claimed herein are made, performed and evaluated, and are intended to be purely exemplary of the methods and compositions and are not intended to limit the scope of the invention. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric.

The disclosure is further illustrated with the help of the following examples which should not be construed to limit the disclosure in any way.

### A. Example 1

The catalyst La_{0.80}Sr_{0.30}FeO₃ (LSF) was synthesized using the gel combustion synthesis method. Thus, lanthanium oxide [La₂O₃ (99.99%)], strontium nitrate [Sr(NO₃)₂ (99%)] and ferric nitrate [Fe(NO₃)₃·9H₂O (98%)] were used as the starting materials. A stoichiometric amount of lanthanum oxide was first dissolved in diluted HNO₃ (50%). To this solution, stoichiometric amounts of strontium nitrate and ferric nitrate were added. Finally, an appropriate amount of citric acid was dissolved in distilled water and added to this nitrate solution. The entire solution was then carefully dehydrated at about 80 °C to remove excess of water. After thermal dehydration of the solution, a viscous gel was formed. As soon as the viscous gel was formed, the temperature of the hot plate was increased to ≈ 250 °C. The powder obtained after auto-ignition was calcined at 600 °C for 1 hour to obtain the chemically pure and crystalline powder.

After synthesis of the La_{0.80}Sr_{0.20}FeO₃ (LSF) catalyst system, the system was tested for desulfurization efficiency. A simulated sulfur feed solution was prepared using a sulfur containing species viz., thiophene (99%, spectrochem) and the organic solvent n-octane (99%, Merck). The simulated stock solution was prepared by dissolving thiophene to obtain a sulfur content 20,950 ppm. Around 20 ml of this simulated stock solutions, was mixed with about 1.0 g of nano-crystalline LSF catalyst. This mixture was then taken in a 100 ml three-necked round bottom flask equipped with a magnetic stirrer and a reflux condenser. The system was heated in a water bath with continuous stirring to a temperature of about 70 °C. After the mixture reached the temperature, 60 ml of hydrogen peroxide (30%, Fisher Scientific) was added drop by drop using an addition funnel, over a period of 15 min. The reaction was allowed to continue for 2.5 h. After completion of the reaction, the whole system was allowed to cool and allowed to settle for another 15 min so that two separate layers of the reaction mixture were formed. After oxidation the two layers were an oil layer (top) and an aqueous layer (bottom). The upper feed oil layer was then filtered and found to contain a sulfur content as low as 110 ppm, i.e. a desulfurization of about 99%.

### B. Example 2

The catalyst La_{0.80}Sr_{0.20}FeO₃ (LSF) was synthesized using the gel combustion synthesis method. Thus, lanthanium oxide [La₂O₃ (99.99%)], strontium nitrate [Sr(NO₃)₂ (99%)] and ferric nitrate [Fe(NO₃)₃·9H₂O (98%)] were used as the starting materials. A stoichiometric amount of lanthanum oxide was first dissolved in diluted HNO₃ (50%). To this solution, stoichiometric amounts of strontium nitrate and ferric nitrate were added. Finally, an appropriate amount of citric acid was dissolved in distilled water and added to this nitrate solution. The entire solution was then carefully dehydrated at about 80 °C to remove excess water. After thermal dehydration of the solution, a viscous gel was formed. As soon as the viscous gel was formed, the temperature of the hot plate was increased to ≈ 250 °C. The powder obtained after auto-ignition was calcined at 600 °C for 1 hour to obtain the chemically pure and crystalline powder.

In this example, the synthesized catalyst was impregnated with a solution of sulfuric acid (30%) for a period of 24 hrs. The excess acid was decanted and the catalyst was then dried in an oven at 100 °C . Further the dried catalyst was calcined at 600 °C for 2 h, resulting in a sulfonated LSF catalyst. The sulfonated LSF catalyst was then tested for its desulfurization efficiency. A simulated sulfur feed solution was prepared using a sulfur containing species viz., thiophene (99%, spectrochem) and organic solvents as n-octane (99%, Merck). The simulated stock was prepared by dissolving thiophene to obtain a sulfur content 20,950 ppm. Around 20 ml of this simulated stock was mixed with about 1.0 g of nano-crystalline LSF catalyst. This mixture was then taken in a 100 ml three-necked round bottom flask equipped with a magnetic stirrer and a reflux condenser. The system was heated in a water bath with continuous stirring to a temperature of about 70 °C. After the mixture reached the temperature, about 60 ml of hydrogen peroxide (30%, Fisher Scientific) was added drop by drop, using an addition funnel, over a period of 15 min. The reaction was allowed to continue for 2.5 h. After the completion of reaction, the whole system was allowed to cool and allowed to settle for another 15 min so that two separate layers of the reaction mixture were formed. After oxidation the two layers were an oil layer (top) and an aqueous layer (bottom). The upper feed oil layer was then filtered and found to contain a sulfur content as low as 70 ppm, i.e. a desulfurization of about 99.5%.

### C. Example 3

In order to determine the effect of the catalyst on desulfurization, a control experiment was conducted without any catalyst. The simulated stock was prepared by dissolving thiophene to obtain a sulfur content of 12,000 ppm. Around 20 ml of this simulated stock was then taken in a 100 ml three-necked round bottom flask equipped with a magnetic stirrer and a reflux condenser. The system was heated in a water bath with continuous stirring to a temperature of about 80 °C. After the mixture reached the temperature, 100 ml of hydrogen peroxide (30 %, Fisher Scientific) was added drop by drop, using addition funnel, over a period of 15 min. The reaction was allowed to continue for 5 h. After the completion of reaction, the whole system was allowed to cool and allowed to settle for another 15 min so that two separate layers of the reaction mixture were formed. Thus after oxidation, the two layers were an oil layer (top) and an aqueous layer (bottom). The upper feed oil layer was then filtered and found to contain a sulfur content as high as 11,900 ppm, i.e. a desulfurization of < 1.0%.

### D. Example 4

This experiment was performed to carry out the desulfurization of Carbon Black Feed Oil (CBFO). For this purpose a 50% mixture of (CBFO-iso octane) was prepared with an initial sulfur content of 2.11%. About 30 ml of this solution was mixed with about 0.5 g of nano-crystalline LSF catalysts. The entire mixture was then taken in a 100 ml three-necked round bottom flask equipped with a magnetic stirrer and a reflux condenser. The system was heated in a water bath with continuous stirring to a temperature of about 75 °C. After the mixture reached the temperature, 10 ml of hydrogen peroxide (30%, Fisher Scientific) was added drop by drop, using addition funnel, over a period of 15 min. The reaction was allowed to continue for 1 h. After the completion of reaction, the whole system was allowed to cool and allowed to settle for another 15 min so that two separate layers of the reaction mixture were formed. Thus after oxidation the two layers were an oil layer (top) and an aqueous layer (bottom). The upper feed oil layer was then filtered and found to contain a sulfur content as high as 11,900 ppm from an initial sulphur content of 21,100 ppm, i.e. a desulfurization of about 44%.

### E. Example 5

This experiment was performed to carry out the desulfurization of Carbon Black Feed Oil (CBFO). For this purpose a 50% mixture of (CBFO-iso octane) was prepared with an initial sulfur content of 2.14%. About 30 ml of this solution was mixed with about 0.5 g of sulfonated nano-crystalline LSF catalysts. The sulfonation of the catalyst was carried by impregnation in a solution of sulfuric acid (30%) for a period of 24 hrs. The excess acid was decanted and the catalyst dried in an oven at 100 °C . Further the dried catalyst was calcined at 600 °C for 2 h, resulting in a sulfonated LSF catalyst. The entire mixture was then taken in a 100 ml three-necked round bottom flask equipped with a magnetic stirrer and a reflux condenser. The system was heated in a water bath with continuous stirring to a temperature of about 65 °C. After the mixture reached the temperature, 10 ml of hydrogen peroxide (30%, Fisher Scientific) was added drop by drop, using addition funnel, over a period of 15 min. The reaction was allowed to continue for 1 h. After the completion of reaction, the whole system was allowed to cool and allowed to settle for another 15 min so that two separate layers of the reaction mixture were formed. Thus after oxidation the two layers were an oil layer (top) and an aqueous layer (bottom). The upper feed oil layer was then filtered and in this case also found to contain a sulfur content as high as 10,900 ppm from an initial sulphur content of 21,490 ppm, i.e. a desulfurization of about 50%.

All these results are tabulated below in Tables 1 and 2:

**Table 1**

| Sr. No. | Simulated Feed (ml) | Catalyst | H₂O₂ (ml) | Temp (°C) | Time | Sulfur content | S removal |
|---|---|---|---|---|---|---|---|
| 1. | 20 | LSF | 60ml. | 70 | 2.5hr. | 0.011% | 99% |
| 2. | 20 | LSF-sulfonated | 60ml. | 70 | 2.5hr. | 0.007% | 99.5% |
| 3. | 20 | No Catalyst | 100ml. | 80 | 5hr. | 1.19% | <1% |

**Table 2**

| Sr. No. | CBFO-Iso octane (ml) | Catalyst | H₂O₂ (ml) | Temp (°C) | Time (min.) | Sulfur content | S removal |
|---|---|---|---|---|---|---|---|
| 4. | 30 | LSF | 10. | 75 | 60 | 1.19% | 44% |
| 5. | 30 | LSF-sulfonated | 10 | 65 | 60 | 1.09% | 50% |

The foregoing embodiments meet the overall objectives of this disclosure as summarized above. However, it will be clearly understood by those skilled in the art that the foregoing description has been made in terms only of the most preferred specific embodiments. Therefore, many other changes and modifications clearly and easily can be made that are also useful improvements and definitely outside the existing art without departing from the scope of the present disclosure, indeed which remain within its very broad overall scope, and which disclosure is to be defined over the existing art by the appended claims.

### References

Anisimov, A. V., Fedorova, E. V., Lesnugin, A. Z., Senvavin. V. M., Asianov. L. A.. Rvbakov. V. B.. Tanrakanova..V., '"Vanadium peroxocomplexes as oxidation catalysts of sulfur organic compounds by hydrogen peroxide in bi-phase systems", Catal.Today, 78.3 19-325 (2003)
Rami'rez-Verduzco L. F., Murrieta-Guevara F., Garcι'a-Gutie'rrez, J. L, Saint Martin-Castan∼on R., Martι'nez-Guerrero M., Montiel-Pacheco M., Mata-Dι'az R., Pet. Sci. Technol. 22, 129 (2004).
Jose' Luis Garcι'a-Gutie'rrez a,*, Gustavo A. Fuentes b, Maria Eugenia Herna'ndez-Tera'n b, Ponciano Garcι'a b, Florentino Murrieta-Guevara a, Federico Jime'nez-Cruz, "Ultra-deep oxidative desulfurization of diesel fuel by the Mo/Al2O3-H2O2 system: The effect of system parameters on catalytic activity ", Applied Catalysis A: General 334, 366-373 (2008).
Guoxian Yu, Shanxiang Lu *, Hui Chen, Zhongnan Zhu, "Diesel fuel desulfurization with hydrogen peroxide promoted by formic acid and catalyzed by activated carbon", Carbon 43, 2285-2294 (2005).
Attar A., Corcoran W. H. "Desulfurization of organic sulfur compounds by selective oxidation. Regenerable and non regenerable oxygen carriers". Ind. Eng Chem Prod Res Dev, 17(2), 102-9 (1978).
Dolbear G. E, Skov E. R. "Selective oxidation as a route to petroleum desulfurization" Am Chem Soc, 45, 375 (2000).
Tam P. S., Kittrell, J. R., Eldridge, J. W., "Desulfurization of fuel oil by oxidation and extraction (I) Enhancement of extraction oil yield", Ind. Eng. Chem. Res., 29, 321(1990).
Hulea V., Fajula F., Bousquet J., J. Catal. 198, 179 (2001).
Palomeque J., Clacens J.M., Figueras F., J. Catal. 211, 103 (2002).
Yazu K., Yamamoto Y., Furuya T., Miki K., Ukegawa K., Energ. Fuels 15, 1535 (2001).
Djangkung S., Murti S., Yang H., Choi K., Kora Y., Mochida I., Appl. Catal. A 252, 331 (2003).
March J., Advanced Organic Chemistry: Reactions, Mechanisms and Structure, Wiley-Interscience, New York, 1992.
Wang D, Qian E. W, Amano H, Okata K, Ishihara A, Kabe T. "Oxidative desulfurization of fuel oil. Part I. Oxidation of dibenzothiophenes using tert-butyl hydroperoxide" Appl Catal A: Gen; 253(1):91-9 (2003).
Zannikos F, Lois E, Stournas S. "Desulfurization of petroleum fractions by oxidation and solvent extraction". Fuel Process Technol, 42(1):35-45 1995.
Rappas, Alkis S. "Process for removing low amounts of organic sulfur from hydrocarbon fuels". US Patent 6,402,940, (2002).
Otsuki, S., Nonaka, T., Takashima, N., Qian, W., Ishihara,A., Imai, T., Kabe, T., "Oxidative desulfurization of light gas oil and vaccum gas oil by oxidation and solvent extraction", Energy Fuels, 14, 1232-1239 (2000).
Collins, F. M., Lucy, A. R., Sharp, C. J., "Oxidation desulfurization of oils via hydrogen peroxide and heteropolyanion catalysis", Mol. Catal. A, 117,397-403 (1997).
Beatriz Zapata a,*, Francisco Pedraza a, Miguel A. Valenzuela, "Catalyst screening for oxidative desulfurization using hydrogen peroxide, Catalysis Today 106, 219-221 (2005).
Yu G., Lu S., Chen H., Zhu Z, Energy Fuels 19,447 (2005).
Ramι'rez-Verduzco L.F., Torres-Garcι'a, E., Go'mez-Quintana R., Gonza'lez-Pen~a V., Murrieta-Guevara F., Catal. Today 98, 289 (2004).
Filippis P. de, Scarcella M., Energy Fuels 17, 1452 (2003).
Te M., Fairbridge, C., Ring, Z., "Oxidation reactivities of dibenzothiophenes in polyoxometalate/H2O2 and formic acid/H2O2 systems", Appl. Catal. A Gen., 219, 267-280 (2001).
Chen L., Guo S. and Zhao D., Oxidative Desulfurization of Simulated Gasoline over Metal Oxide-loaded Molecular Sieve* Chin. J. Chem. Eng., 15(4) 520-523 (2007).
Tam, P.S., Kittrell, J.R., Eldridge, J.W., "Desulfurization of fuel oil by oxidation and extraction Kinetic modeling of oxidation reaction", Ind. Eng. Chem. Res., 29, 324-3 29 ( 1990).
Shiraishi, Y., Taki, Y., Hirai, T., Komasawa I., "Visible light-induced desulfurization process for catalytic cracked gasoline using an organic two-phase extraction system", Ind. Eng. Chem. Res., 38,4538-4544 (1999).
Shiraishi, Y., Hirai, T., "Desulfurization of vacuum gasoil based on chemical oxidation followed by liquid-liquid extraction", Energy Fuels, 18,37-40 (2004).
Mei, H., Mei, B.W., Yen, T.F., "A new method for obtaining ultra-low sulfur diesel fuel via ultrasound assisted oxidative desulfurization", Fuel, 82,405-4 14 (2003).
Shiraishi, Y., Tachibana, K., Hirai, T., Komasawa, I.,"Desulfurization and denitrogenation process for light oils based on chemical oxidation followed by liquid-liquid extraction", Ind. Enn. Chem. Res., 41, 4362-4375 (2002).
Murata, S., Murata, K., Kidena, K., Nomura, M., "A novel oxidative desulfurization system for diesel fuels with molecular oxygen in the presence of cobalt catalysts and aldehydes", Energy Fuel, 18, 116-121 (2004).
Sun, G, Xia, D., "Effect of metallic salt to desulfurization of light oils", J. Fuel Chem. Technol., 29, 509-514 (2001).
Kong, L.Y., Li, G., Wang, X.S., "Kinetics and mechanism of liquid-phase oxidation of thiophene over TS-1 using H2O2 under mild conditions", Catal. Lett., 92, 163-167(2004).

## Claims

1. A method of reducing the amount of sulfur in a composition comprising sulfur, the method comprising the steps of:
a. providing a composition comprising sulfur; wherein the composition comprising sulfur comprises petroleum, and
b. contacting the composition comprising sulfur with an oxidation agent and an oxidation catalyst, wherein the oxidation catalyst has the formula M¹₁₋ₓM³ₓM²O₃, wherein M¹ is a rare-earth element, wherein M² is a transition metal, wherein M³ is Ca or Sr, and wherein x is from 0.01 to 0.80, wherein the oxidation catalyst is a nano-crystalline form, wherein the oxidation agent comprises H₂O₂ NO₂, N₂O₃, N₂O₄, acetic acid, formic acid, sulfuric acid, nitric acid, O₂, air, or ozone, or a combination thereof,
thereby reducing the amount of sulfur in the composition comprising sulfur.

2. The method of claim 1, wherein the composition comprising sulfur is petroleum.

3. The method of claim 1 or claim 2, wherein the oxidation agent comprises H₂O₂.

4. The method of any one of claims 1-3, wherein the rare-earth element is La, Pr, Gd, Sm, Nd, and Ce; but is preferably La.

5. The method of any one of claims 1-4, wherein the transition metal is Fe, Mn, Ni, Co, Mo, and Cu; but is preferably Fe.

6. The method of any one of claims 1-5, wherein M³ is Sr.

7. The method of any one of claims 1-6, wherein x is from 0.10 to 0.50, preferably from 0.10 to 0.30.

8. The method of any one of claims 1-7, wherein in step (b) the catalyst is present in an amount of solvent in a range of 1% to 60% weight by volume.

9. The method of any one of claims 1-8, wherein the nano-crystalline form has a size from 5 nm to 100 nm.

10. The method of any one of claims 1-9, wherein the contacting occurs at a temperature from 20 °C to 150 °C.

11. The method of any one of claims 1-10, wherein the amount of oxidizing agent is from 5% to 300% volume per volume of the composition comprising sulfur.

12. The method of any one of claims 1-11, wherein the oxidation catalyst is impregnated with a solution comprising sulfuric acid.

13. The method of claim 12, wherein the oxidation catalyst is a nano-crystalline form of M¹₁₋ₓSrₓM²O₃ of a sulfuric acid salt.

14. The method of any one of claims 1-13, wherein the oxidation catalyst is present in an organic solvent.

15. A composition comprising petroleum, sulfur, an oxidation agent and an oxidation catalyst, wherein the oxidation catalyst has the formula M¹₁₋ₓM³ₓM²O₃, wherein M¹ is a rare-earth element, wherein M² is a transition metal element, and wherein M³ is Ca or Sr, and wherein x is from 0.01 to 0.80, and wherein the oxidation catalyst is in a nano-crystalline form, wherein the oxidation agent is selected from H₂O₂ NO₂, N₂O₃, N₂O₄, acetic acid, formic acid, sulfuric acid, nitric acid, O₂, air, or ozone, or a combination thereof.

16. The composition of claim 15, wherein M³ is Sr.

## Patentansprüche

1. Verfahren zum Reduzieren der Schwefelmenge in einer Zusammensetzung, die Schwefel aufweist, wobei das Verfahren die folgenden Schritte umfasst:
a. Bereitstellen einer Zusammensetzung, die Schwefel aufweist; wobei die Schwefel aufweisende Zusammensetzung Erdöl aufweist, und
b. Inkontaktbringen der Schwefel aufweisenden Zusammensetzung mit einem Oxidationsmittel und einem Oxidationskatalysator, wobei der Oxidationskatalysator die Formel M¹₁₋ₓM³ₓM²O₃ hat, wobei M¹ ein Seltenerdelement ist, wobei M² ein Übergangsmetall ist, wobei M³ Ca oder Sr ist, und wobei x 0,01 bis 0,80 beträgt, wobei der Oxidationskatalysator eine nanokristalline Form ist, wobei das Oxidationsmittel H₂O₂, NO₂, N₂O₃, N₂O₄, Essigsäure, Ameisensäure, Schwefelsäure, Salpetersäure, O₂, Luft, oder Ozon aufweist, oder eine Kombination davon,
wodurch die Schwefelmenge in der Schwefel aufweisenden Zusammensetzung reduziert wird.

2. Verfahren nach Anspruch 1, wobei die Schwefel aufweisende Zusammensetzung Erdöl ist.

3. Verfahren nach Anspruch 1 oder Anspruch 2, wobei das Oxidationsmittel H₂O₂ aufweist.

4. Verfahren nach einem der Ansprüche 1 bis 3, wobei das Seltenerdelement La, Pr, Gd, Sm, Nd, und Ce ist; aber vorzugsweise La ist.

5. Verfahren nach einem der Ansprüche 1 bis 4, wobei das Übergangsmetall Fe, Mn, Ni, Co, Mo, und Cu ist; aber vorzugsweise Fe ist.

6. Verfahren nach einem der Ansprüche 1 bis 5, wobei M³ Sr ist.

7. Verfahren nach einem der Ansprüche 1 bis 6, wobei x 0,10 bis 0,50, vorzugsweise 0,10 bis 0,30 beträgt.

8. Verfahren nach einem der Ansprüche 1 bis 7, wobei in Schritt (b) der Katalysator in einer Menge an Lösungsmittel in einem Bereich von 1 % bis 60 % Gewicht nach Volumen vorliegt.

9. Verfahren nach einem der Ansprüche 1 bis 8, wobei die nanokristalline Form eine Größe von 5 nm bis 100 nm hat.

10. Verfahren nach einem der Ansprüche 1 bis 9, wobei das Inkontaktbringen bei einer Temperatur von 20 °C bis 150 °C erfolgt.

11. Verfahren nach einem der Ansprüche 1 bis 10, wobei die Menge an Oxidationsmittel 5 % bis 300 % Volumen pro Volumen der Schwefel aufweisenden Zusammensetzung beträgt.

12. Verfahren nach einem der Ansprüche 1 bis 11, wobei der Oxidationskatalysator mit einer Lösung imprägniert wird, die Schwefelsäure aufweist.

13. Verfahren nach Anspruch 12, wobei der Oxidationskatalysator eine nanokristalline Form von M¹₁₋ₓSrₓM²O₃ eines Schwefelsäuresalzes ist.

14. Verfahren nach einem der Ansprüche 1-13, wobei der Oxidationskatalysator in einem organischen Lösungsmittel vorliegt.

15. Zusammensetzung, aufweisend Erdöl, Schwefel, ein Oxidationsmittel und einen Oxidationskatalysator, wobei der Oxidationskatalysator die Formel M¹₁₋ₓM³ₓM²O₃ hat, wobei M¹ ein Seltenerdelement ist, wobei M² ein Übergangsmetallelement ist, und wobei M³ Ca oder Sr ist, und wobei x 0,01 bis 0,80 ist, und wobei der Oxidationskatalysator in nanokristalliner Form vorliegt, wobei das Oxidationsmittel ausgewählt ist aus H₂O₂, NO₂, N₂O₃, N₂O₄, Essigsäure, Ameisensäure, Schwefelsäure, Salpetersäure, O₂, Luft, oder Ozon, oder einer Kombination davon.

16. Zusammensetzung nach Anspruch 15, wobei M³ Sr ist

## Revendications

1. Procédé de réduction de la quantité de soufre dans une composition comprenant du soufre, le procédé comprenant les étapes de :
a. fourniture d'une composition comprenant du soufre ; dans lequel la composition comprenant du soufre comprend du pétrole, et
b. mise en contact de la composition comprenant du soufre avec un agent d'oxydation et un catalyseur d'oxydation, dans lequel le catalyseur d'oxydation a la formule M¹₁₋ₓM³ₓM²O₃, où M¹ est un élément terre rare, où M² est un métal de transition, où M³ est Ca ou Sr, et où x est de 0,01 à 0,80, dans lequel le catalyseur d'oxydation est une forme nanocristalline, dans lequel l'agent d'oxydation comprend H₂O₂, NO₂, N₂O₃, N₂O₄, l'acide acétique, l'acide formique, l'acide sulfurique, l'acide nitrique, O₂, l'air, ou l'ozone, ou une combinaison de ceux-ci,
de façon à réduire la quantité de soufre dans la composition comprenant du soufre.

2. Procédé selon la revendication 1, dans lequel la composition comprenant du soufre est du pétrole.

3. Procédé selon la revendication 1 ou la revendication 2, dans lequel l'agent d'oxydation comprend H₂O₂.

4. Procédé selon l'une quelconque des revendications 1 à 3, dans lequel l'élément terre rare est La, Pr, Gd, Sm, Nd, et Ce ; mais est de préférence La.

5. Procédé selon l'une quelconque des revendications 1 à 4, dans lequel le métal de transition est Fe, Mn, Ni, Co, Mo et Cu ; mais est de préférence Fe.

6. Procédé selon l'une quelconque des revendications 1 à 5, dans lequel M³ est Sr.

7. Procédé selon l'une quelconque des revendications 1 à 6, dans lequel x est de 0,10 à 0,50, de préférence de 0,10 à 0,30.

8. Procédé selon l'une quelconque des revendications 1 à 7, dans lequel, dans l'étape (b), le catalyseur est présent en une quantité de solvant dans une plage de 1 % à 60 % en poids par volume.

9. Procédé selon l'une quelconque des revendications 1 à 8, dans lequel la forme nanocristalline a une taille de 5 nm à 100 nm.

10. Procédé selon l'une quelconque des revendications 1 à 9, dans lequel la mise en contact est conduite à une température de 20 °C à 150 °C.

11. Procédé selon l'une quelconque des revendications 1 à 10, dans lequel la quantité d'agent oxydant est de 5 % à 300 % en volume par volume de la composition comprenant du soufre.

12. Procédé selon l'une quelconque des revendications 1 à 11, dans lequel le catalyseur d'oxydation est imprégné avec une solution comprenant de l'acide sulfurique.

13. Procédé selon la revendication 12, dans lequel le catalyseur d'oxydation est une forme nanocristalline de M¹₁₋ₓSrₓM²O₃ d'un sel d'acide sulfurique.

14. Procédé selon l'une quelconque des revendications 1 à 13, dans lequel le catalyseur d'oxydation est présent dans un solvant organique.

15. Composition comprenant du pétrole, du soufre, un agent d'oxydation et un catalyseur d'oxydation, dans laquelle le catalyseur d'oxydation a la formule M¹₁₋ₓM³ₓM²O₃, où M¹ est un élément terre rare, où M² est un métal de transition, où M³ est Ca ou Sr, et où x est de 0,01 à 0,80, et dans laquelle le catalyseur d'oxydation est une forme nanocristalline, dans laquelle l'agent d'oxydation est choisi parmi H₂O₂, NO₂, N₂O₃, N₂O₄, l'acide acétique, l'acide formique, l'acide sulfurique, l'acide nitrique, O₂, l'air, ou l'ozone, ou une combinaison de ceux-ci.

16. Composition selon la revendication 15, dans laquelle M³ est Sr.
